(19) Europäisches Patentamt
European Patent Office
Office européen des brevets

(11) EP 4 497 847 A1

(12) EUROPEAN PATENT APPLICATION
published in accordance with Art. 153(4) EPC

(43) Date of publication:
**29.01.2025 Bulletin 2025/05**

(21) Application number: **23774588.0**

(22) Date of filing: **10.03.2023**

(51) International Patent Classification (IPC):
***C25B 13/08*** (2006.01) ***C25B 1/02*** (2006.01)
***C25B 1/04*** (2021.01) ***C25B 9/00*** (2021.01)
***C25B 9/23*** (2021.01) ***C25B 11/052*** (2021.01)
***C25B 11/053*** (2021.01) ***C25B 11/065*** (2021.01)
***C25B 11/081*** (2021.01) ***C25B 13/02*** (2006.01)
***C25B 13/04*** (2021.01) ***H01B 1/06*** (2006.01)
***H01M 8/10*** (2016.01) ***H01M 8/1018*** (2016.01)
***H01M 8/1039*** (2016.01) ***H01M 8/1046*** (2016.01)
***H01M 8/1051*** (2016.01) ***H01M 8/1053*** (2016.01)
***H01M 8/1058*** (2016.01) ***H01M 8/1067*** (2016.01)

(52) Cooperative Patent Classification (CPC):
**C25B 1/02; C25B 1/04; C25B 9/00; C25B 9/23; C25B 11/052; C25B 11/053; C25B 11/065; C25B 11/081; C25B 13/02; C25B 13/04; C25B 13/08; H01B 1/06; H01M 8/10; H01M 8/1018; H01M 8/1039;** (Cont.)

(86) International application number:
**PCT/JP2023/009285**

(87) International publication number:
**WO 2023/181989 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2022 JP 2022046356**
**12.07.2022 JP 2022111594**
**14.11.2022 JP 2022181573**
**14.11.2022 JP 2022181574**

(71) Applicant: **Toray Industries, Inc.**
**Tokyo 103-8666 (JP)**

(72) Inventors:
- **HIRAHARA Ryota**
  **Otsu-shi, Shiga 520-8558 (JP)**
- **MINAMIBAYASHI Kenta**
  **Otsu-shi, Shiga 520-8558 (JP)**
- **IZUHARA Daisuke**
  **Otsu-shi, Shiga 520-8558 (JP)**
- **MATSUI Kazuma**
  **Otsu-shi, Shiga 520-8558 (JP)**
- **KUNITA Tomoyuki**
  **Otsu-shi, Shiga 520-8558 (JP)**

(74) Representative: **Hoefer & Partner Patentanwälte mbB**
**Pilgersheimer Straße 20**
**81543 München (DE)**

# (54) WATER ELECTROLYSIS METHOD, WATER ELECTROLYSIS CELL AND WATER ELECTROLYSIS SYSTEM

(57) An object of the present invention is to provide a water electrolysis method capable of maintaining a high electrolysis efficiency. The present invention proposes a water electrolysis method, including supplying water to an electrolysis cell whose interior is divided into an anode and a cathode by an electrolyte membrane, and electrolyzing the water, to generate oxygen at the anode and hydrogen at the cathode, wherein the electrolyte membrane includes: a first layer containing a polymer electrolyte; and a second layer containing carbon particles, and provided on the side of the cathode of the first layer.

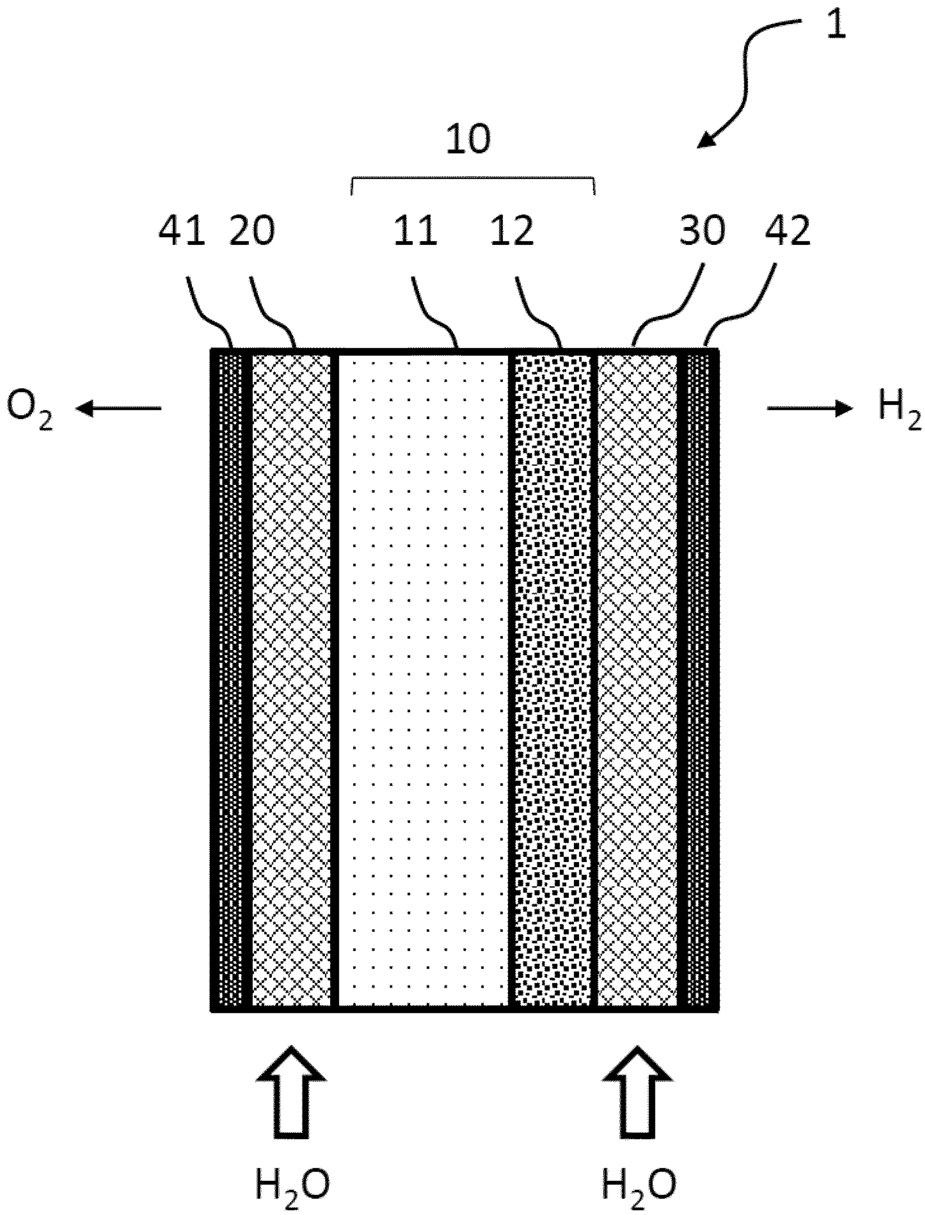


FIG. 1

(52) Cooperative Patent Classification (CPC): (Cont.)
**H01M 8/1046; H01M 8/1051; H01M 8/1053; H01M 8/1058; H01M 8/1067;** Y02E 60/50

## Description

### Technical Field

The present invention relates to a water electrolysis method, a water electrolysis cell and a water electrolyzer.

### Background Art

Methods are known in which oxygen and hydrogen are generated by water electrolysis using a polymer electrolyte membrane. In such a water electrolysis method, water is supplied to an electrolysis cell whose interior is divided into an anode and a cathode by a polymer electrolyte membrane, to generate oxygen at the anode and hydrogen at the cathode.

Known methods of supplying water to the electrolysis cell include: a method of supplying water only to the anode (see, Patent Literature 1, for example); a method of supplying water only to the cathode (see, Patent Literature 2, for example); and a method of supplying water to the anode and the cathode (see, Patent Literature 3, for example).

### Citation List

### Patent Literature

Patent Literature 1: JP 2021-25116 A
Patent Literature 2: JP 2020-525653 A
Patent Literature 3: JP 2021-105194 A

### Summary of Invention

### Technical Problem

To maintain a high electrolysis efficiency in water electrolysis using a polymer electrolyte membrane, it is important to maintain the proton conductivity of the polymer electrolyte membrane. However, it was not possible to maintain a sufficiently high electrolysis efficiency in a water electrolysis method using a conventional polymer electrolyte membrane.

In view of the above-mentioned problem, an object of the present invention is to provide a water electrolysis method capable of maintaining a high electrolysis efficiency.

### Solution to Problem

The present inventors have found out that the above-described problem is due to the environment in which hydrogen peroxide and hydrogen peroxide radicals generated as by-products at the cathode are prone to attack the polymer electrolyte membrane, thereby completing the present invention.

Specifically, the present invention provides a water electrolysis method, including supplying water to an electrolysis cell whose interior is divided into an anode and a cathode by an electrolyte membrane, and electrolyzing the water, to generate oxygen at the anode and hydrogen at the cathode, wherein the electrolyte membrane includes: a first layer containing a polymer electrolyte; and a second layer containing carbon particles, and provided on a cathode side of the first layer. Advantageous Effects of Invention

According to the present invention, it is possible to provide a water electrolysis method capable of maintaining a high electrolysis efficiency.

### Brief Description of Drawings

FIG. 1 is a cross-sectional schematic diagram showing one example of an electrolysis cell which can be used in the water electrolysis method according to an embodiment of the present invention.

FIG. 2 is a graph showing the relationship between the electrolysis time (evaluation time) and the applied voltage, in Examples 1 and 2 as well as Comparative Examples 1 and 2.

FIG. 3 is a graph showing the relationship between the electrolysis time (evaluation time) and the applied voltage, in Examples 3 and 4 as well as Comparative Examples 3 and 4.

FIG. 4 is a graph showing the relationship between the electrolysis time (evaluation time) and the applied voltage, in Examples 1 to 4.

Description of Embodiments

Embodiments of the present invention will be described below in detail. However, the present invention is in no way limited to the following embodiments, and various modification can be made depending on the purpose and the application.

[Water Electrolysis Method]

The water electrolysis method according to an embodiment of the present invention will be described, with reference to FIG. 1. FIG. 1 is a cross-sectional schematic diagram showing one example of an electrolysis cell which can be used in the water electrolysis method according to the embodiment of the present invention.

The interior of an electrolysis cell 1 is divided into an anode 20 and a cathode 30 by an electrolyte membrane 10. A power supply (not shown in the figure) is connected to each of the anode 20 and the cathode 30. The electrolysis cell 1 has a configuration in which separators 41 and 42 are sandwiching the above-described members from both sides. The electrolyte membrane 10 includes a first layer 11 and a second layer 12, and the second layer 12 is provided on the side of the cathode 30. In the present invention, the first layer 11 contains a polymer electrolyte, and the second layer 12 contains carbon particles. The components of the first layer 11 and the second layer 12 will be described later in detail. Further, preferred embodiments of electrodes will also be described later.

Water electrolysis is carried out by applying a voltage to the electrodes. When the first layer 11 is degraded as a result of performing water electrolysis for a long period of time, to result in an increased membrane resistance, it is necessary to increase the applied voltage in order to maintain a constant current density. An increase in the applied voltage means a decrease in the electrolysis efficiency.

In water electrolysis using a polymer electrolyte membrane, one of the reasons for a decrease in the electrolysis efficiency is the attack of hydrogen peroxides to the polymer electrolyte. In the present specification, the term "hydrogen peroxides" is used as a generic term referring to hydrogen peroxide and radicals generated by the decomposition of hydrogen peroxide. In water electrolysis, there are cases where oxygen generated at the anode is transferred to the cathode, and reacts with hydrogen generated at the cathode to generate hydrogen peroxides as by-products. Such by-products are thought to cause the degradation of the electrolyte membrane (namely, a decrease in proton conductivity).

In the water electrolysis method according to the embodiment of the present invention, the second layer 12 containing carbon particles is provided on the side of the cathode 30 of the first layer 11. The second layer 12 is thought to reduce the transfer of hydrogen peroxides generated as by-products at the cathode 30 to the first layer 11, thereby reducing the degradation of the first layer. Although the mechanism thereof is not clear, it is assumed that the carbon particles contained in the second layer 12 are responsible for scavenging or decomposing hydrogen peroxides. Thus, the water electrolysis method according to the embodiment of the present invention provides the effect that an increase in the applied voltage is reduced and a high electrolysis efficiency can be maintained.

In the water electrolysis method according to the embodiment of the present invention, the method of supplying water to the electrolysis cell is not particularly limited, and a known method can be used. Specifically, known methods of supplying water to the electrolysis cell include: a method of supplying water to the anode; a method of supplying water to the cathode; and a method of supplying water to the anode and the cathode. In the methods of supplying water described above, it is preferred to supply water from the exterior of the electrolysis cell, using a means such as a pump. Any of the above-described methods of supplying water can be used in the water electrolysis method according to the embodiment of the present invention. In particular, the supply of water is preferably performed at least to the anode, because accelerating the generation of oxygen and protons by the oxidation reaction of water is preferred to from the viewpoint of electrolysis efficiency.

In the water electrolysis method according to the embodiment of the present invention, water ($H_2O$) is supplied to the anode 20 and the cathode 30 and electrolyze the water, to generate oxygen ($O_2$) at the anode 20 and hydrogen ($H_2$) at the cathode 30. A high electrolysis efficiency can be expected, by directly supplying water to the anode at which water is required for the electrolysis reaction.

Water may but need not be supplied to the cathode 30. It can be expected to accelerate the release of hydrogen generated at the cathode 30, by supplying water to the cathode 30. When water is supplied to the cathode 30, however, there are cases where dissolved oxygen contained in the supplied water reacts with hydrogen generated at the cathode 30, to generate hydrogen peroxides as by-products. Therefore, it is preferred not to supply water to the cathode 30, in the water electrolysis method according to the embodiment of the present invention, from the viewpoint of reducing the

generation of hydrogen peroxides as by-products. That is, it is preferred to supply water only to the anode 20, in the water electrolysis method according to the embodiment of the present invention.

In the case of supplying water to the cathode 30, it is preferred to use degassed water, taking the above circumstances into consideration. Any of known methods, such as gas bubbling, reduced pressure treatment, membrane separation, and chemical removal by a deoxidant, can be used as a degassing treatment.

Further, it is possible to use a method in which water is supplied only to the cathode, without supplying water to the anode, in the water electrolysis method according to the embodiment of the present invention. In this case, the water supplied to the cathode is transferred to the anode through the electrolyte membrane. It is preferred to use degassed water in this case, as well.

The water electrolysis method according to the embodiment of the present invention is preferably proton exchange membrane water electrolysis in which a proton exchange membrane is used as the electrolyte membrane, but may be anion exchange membrane water electrolysis in which an anion exchange membrane is used.

[First Layer]

The electrolyte membrane to be used in the water electrolysis method according to the present invention includes two layers. Of these, the layer on the side of the anode in relation to the position of the second layer to be described later, is referred to as "first layer", and the first layer contains a polymer electrolyte. That is, the first layer functions as a polymer electrolyte layer. It is possible to use a known polymer electrolyte, such as a fluoropolymer electrolyte or a hydrocarbon-based polymer electrolyte, as the polymer electrolyte.

The fluoropolymer electrolyte may be, for example, a fluoropolymer containing an ionic group. The "fluoropolymer" refers to a polymer in which most or all of hydrogen atoms in the alkyl groups and/or alkylene groups in the molecule are substituted with fluorine atoms.

Examples of the fluoropolymer electrolyte include perfluorinated sulfonic acid-based polymers, perfluorocarbon phosphonic acid-based polymers, trifluorostyrene sulfonic acid-based polymers, trifluorostyrene phosphonic acid-based polymers, ethylene tetrafluoroethylene-g-styrene sulfonic acid-based polymers, ethylene-tetrafluoroethylene copolymers, and polyvinylidene fluoride-perfluorinated sulfonic acid-based polymers.

Among these, a perfluorinated sulfonic acid-based polymer is preferred from the viewpoints of heat resistance and chemical stability. Examples of such a polymer include commercially available products such as "Nafion" (registered trademark) (manufactured by The Chemours Company TT, LLC), "FLEMION" (registered trademark) (manufactured by AGC Chemicals Company) and "Asiplex" (registered trademark) (manufactured by Asahi Kasei Corporation).

The hydrocarbon-based polymer electrolyte may be, for example, a hydrocarbon-based polymer containing an ionic group. The "hydrocarbon-based polymer" refers to a polymer which has a main chain containing a hydrocarbon as a main structural unit.

The hydrocarbon-based polymer electrolyte is preferably an aromatic hydrocarbon-based polymer having an aromatic ring in the main chain. In this regard, the definition of the aromatic ring may include not only a hydrocarbon-based aromatic ring, but also a heterocyclic ring. Further, the polymer may partially contain an aliphatic-based unit along with an aromatic ring unit.

Specific examples of the aromatic hydrocarbon-based polymer include polymers having, in the main chain, a structure selected from the group consisting of: polysulfone, polyether sulfone, polyphenylene oxide, polyarylene ether, polyphenylene sulfide, polyphenylene sulfide sulfone, polyparaphenylene, a polyarylene-based polymer, polyarylene ketone, polyether ketone, polyarylene phosphine oxide, polyether phosphine oxide, polybenzoxazole, polybenzothiazole, polybenzimidazole, polyamide, polyimide, polyetherimide and polyimidesulfone, along with the aromatic ring.

The "polysulfone" as described above is a generic term for a structure having a sulfone bond in the molecular chain; the "polyether sulfone" is a generic term for a structure having an ether bond and a sulfone bond in the molecular chain; and the "polyether ketone" is a generic term for a structure having an ether bond and a ketone bond in the molecular chain. The aromatic hydrocarbon-based polymer may have a plurality of structures among these structures.

A polyether ketone-based polymer is particularly preferred as the aromatic hydrocarbon-based polymer. Examples of the polyether ketone-based polymer include polyether ketone, polyether ketone ketone, polyether ether ketone, polyether ether ketone ketone and polyether ketone ether ketone ketone.

The above-described ionic group can be any ionic group having either a cation exchange capacity or an anion exchange capacity. In the water electrolysis method according to the present invention, it is preferred to use a proton-exchange ionic group. Examples of such a functional group include sulfonic acid group, sulfonimide group, sulfuric acid group, phosphonic acid group, phosphoric acid group, carboxylic acid group, ammonium group, phosphonium group and amino group. The polymer can contain two or more types of ionic groups. In particular, a sulfonic acid group, a sulfonimide group and a sulfuric acid group are preferred from the viewpoint of obtaining an excellent water electrolysis performance, and a sulfonic acid group is more preferred from the viewpoint of raw material cost.

The polymer electrolyte preferably has an ion exchange capacity (IEC) of 0.1 meq/g or more and 5.0 meq/g or

less, from the viewpoint of the balance between proton conductivity and water resistance. The IEC of the hydrocarbon-based polymer containing an ionic group is more preferably 1.0 meq/g or more, and still more preferably 1.4 meq/g or more. Further, the IEC of the hydrocarbon-based polymer containing an ionic group is more preferably 3.5 meq/g or less, and still more preferably 3.0 meq/g or less. The IEC of the fluoropolymer containing an ionic group is more preferably 0.5 meq/g or more, and still more preferably 0.7 meq/g or more. Further, the IEC of the fluoropolymer containing an ionic group is more preferably 1.8 meq/g or less, and still more preferably 1.5 meq/g or less. When the IEC is 0.1 meq/g or more and 5.0 meq/g or less, an excellent proton conductivity and water resistance can be achieved in a balanced manner.

The "IEC" as used herein refers to the molar amount of ionic groups introduced into the polymer electrolyte per unit dry weight, and a higher IEC value indicates a larger amount of ionic groups introduced. In the present invention, the IEC is defined as a value determined by the neutralization titration method.

The polymer electrolyte to be used in the first layer is preferably a hydrocarbon-based polymer, because of its relatively high water electrolysis performance, and relatively low oxygen permeability. The polymer electrolyte is more preferably an aromatic hydrocarbon-based block copolymer, and particularly preferably a polyether ketone-based block copolymer. The "block copolymer" as used herein refers to a block copolymer that includes a segment including an ionic group-containing structural unit and a segment including an ionic group-free structural unit.

The first layer preferably contains a hydrocarbon-based polymer electrolyte as the polymer electrolyte. The first layer preferably contains the hydrocarbon-based polymer electrolyte in an amount of 60% by mass or more, more preferably 75% by mass or more, still more preferably 90% by mass, and particularly preferably 100% by mass, with respect to the total mass of the polymer electrolyte contained in the first layer.

The first layer preferably includes a porous substrate, in order to enhance the strength of the layer. The embodiment in which the first layer includes a porous substrate is preferably, for example, an embodiment in which the first layer includes: a portion (composite portion) which includes the porous substrate and the polymer electrolyte, and which can be in the form of layers; and a portion (non-composite portion) which includes the polymer electrolyte and does not include the porous substrate, which can be in the form of layers, and which is provided on one surface or both surfaces of the composite portion. In the composite portion, the hydrocarbon-based polymer electrolyte is preferably filled or impregnated into the pores of the porous substrate.

In cases where the composite portion is in the form of layers, the thickness proportion of the composite portion in the first layer is preferably from 10 to 90%, more preferably from 20 to 80%, and particularly preferably from 30 to 70%, when the thickness of the first layer is taken as 100%. The thickness of the composite portion is determined as the thickness of the porous substrate. Specifically, the thickness of the composite portion is preferably within the range of from 22 to 47 μm, more preferably within the range of from 25 to 45 μm, and particularly preferably within the range of from 30 to 43 μm. In cases where the non-composite portion is in the form of layers, the thickness of the non-composite portion per layer is preferably 3 μm or more, more preferably 5 μm or more, and particularly preferably 10 μm or more. Furter, the thickness of the non-composite portion per layer is preferably 45 μm or less, more preferably 40 μm or less, and particularly preferably 35 μm or less.

The form of the porous substrate may be, for example, a woven fabric, a non-nonwoven fabric, a porous film, a mesh woven fabric or the like. The porous substrate may be, for example, a hydrocarbon-based porous substrate containing a hydrocarbon-based polymer compound as a main component, a fluorine-based porous substrate containing a fluoropolymer compound as a main component, or the like.

Examples of the hydrocarbon-based polymer compound include polyethylene (PE), polypropylene (PP), polystyrene (PS), polyacrylate, polymethacrylate, polyvinyl chloride (PVC), polyvinylidene chloride (PVdC), polyester, polycarbonate (PC), polysulfone (PSU), polyether sulfone (PES), polyphenylene oxide (PPO), polyarylene ether-based polymers, polyphenylene sulfide (PPS), polyphenylene sulfide sulfone, polyparaphenylene (PPP), polyarylene-based polymers, polyarylene ketone, polyether ketone (PEK), polyarylene phosphine oxide, polyether phosphine oxide, polybenzoxazole (PBO), polybenzothiazole (PBT), polybenzimidazole (PBI), polyamide (PA), polyimide (PI), polyetherimide (PEI) and polyimidesulfone (PIS).

Examples of the fluoropolymer compound include polytetrafluoroethylene (PTFE), polyhexafluoropropylene, tetrafluoroethylene-hexafluoropropylene copolymers (FEP), ethylene-tetrafluoroethylene copolymers (ETFE), polyvinylidene fluoride (PVdF), polychlorotrifluoroethylene (PCTFE), perfluoroalkoxy fluororesins (PFA) and ethylene-chlorotrifluoroethylene copolymers (ECTFE).

The porous substrate is preferably, for example, a porous substrate having a relatively high strength, from the viewpoint of reinforcing the first layer having a relatively large thickness of 40 μm or more, and a mesh woven fabric is preferred from this point of view. The mesh woven fabric has a relatively larger fiber diameter and a higher strength, as compared to a porous substrate which has been conventionally and commonly used in the art. The material of the fibers constituting the mesh woven fabric is preferably a polyester, a liquid crystal polyester, polyphenylene sulfide, polyether ketone, polyether ether ketone or polyether ketone ketone. Among these, a liquid crystal polyester is particularly preferred from the viewpoint of the strength.

The first layer preferably has a thickness of 40 μm or more and 250 μm or less. The thickness of the first layer is

more preferably 50 μm or more, still more preferably 60 μm or more, and particularly preferably 70 μm or more, from the viewpoint of improving the durability. When the first layer has a thickness of more than 250 μm, on the other hand, it leads to a decrease in the water electrolysis performance, and it is disadvantageous from the viewpoints of material cost, productivity and workability. From the above-described points of view, the thickness of the first layer is more preferably 200 μm or less, still more preferably 180 μm or less, and particularly preferably 150 μm or less.

The first layer can contain any of various types of additives, such as, for example, an antioxidant, a surfactant, a radical scavenger, a hydrogen peroxide decomposer, a non-electrolyte polymer, an elastomer, a filler and/or the like, as long as the effects of the present invention are not impaired.

In cases where the first layer includes a polymer electrolyte and a porous substrate, the total mass of the polymer electrolyte and the porous substrate is preferably 80% by mass or more, more preferably 90% by mass or more, and particularly preferably 95% by mass or more, with respect to the total mass of the first layer. Further, in cases where the first layer does not include a porous substrate, the mass of the polymer electrolyte is preferably 80% by mass or more, more preferably 90% by mass or more, and particularly preferably 95% by mass or more, with respect to the total mass of the first layer.

In cases where the first layer includes any components other than the polymer electrolyte and the porous substrate, the total mass of the other components is preferably less than 20% by mass, more preferably less than 10% by mass, and particularly preferably less than 5% by mass, with respect to the total mass of the first layer.

Although the polymer electrolyte to be used in the first layer is preferably a proton-exchange polymer electrolyte, as described above, the polymer electrolyte may be an anion-exchange polymer electrolyte.

[Second Layer]

The electrolyte membrane to be used in the water electrolysis method according to the present invention includes two layers. Of these, the layer on the side of the cathode in relation to the position of the first layer described above, is referred to as "second layer", and the second layer contains at least carbon particles. The carbon particles are not particularly limited, and any known carbon particles can be used. Examples of the carbon particles include carbon black, activated carbon, carbon nanotubes, carbon nanofibers and fullerene. Among these, carbon black is preferred. Examples of the carbon black include furnace black, acetylene black, thermal black, channel black, lamp black, gas black, oil black and Ketjen black.

The carbon particles preferably have a specific surface area within the range of from 30 to 2,000 $m^2/g$. Carbon particles having such a specific surface area can be expected to effectively contribute to scavenging and decomposing hydrogen peroxides.

Further, the carbon particles preferably have, as a surface functional group, an acidic group such as a phenolic hydroxyl group, a carboxy group, a quinone group or a lactone group. Carbon particles having such a surface functional group can be expected to effectively contribute to scavenging and decomposing hydrogen peroxides.

In addition, the carbon particles are preferably carbon particles on which a catalyst metal is not supported. For example, carbon particles (carbon) on which a catalyst metal such as platinum is supported have been commonly used in a catalyst layer. However, carbon particles on which such a catalyst metal is supported may fail to sufficiently provide the function of scavenging or decomposing hydrogen peroxides.

Although the carbon particles are preferably carbon particles on which a catalyst metal is not supported, as described above, the second layer can contain a small amount of carbon particles on which a catalyst metal is supported, as long as the effects of the present invention are not impaired. The content of the carbon particles on which a catalyst metal is supported, in such a case, is preferably 20% by mass or less, more preferably 10% by mass or less, and particularly preferably 5% by mass or less, when the total amount of the carbon particles is taken as 100% by mass.

The carbon particles are expected to provide the effect of adhering the second layer to the first layer by an anchoring effect, in addition to contributing to scavenging and decomposing hydrogen peroxides.

The carbon particles preferably have an average primary particle size of 5 nm or more, more preferably 10 nm or more, and particularly preferably 20 nm or more, and at the same time, preferably 500 nm or less, more preferably 200 nm or less, and particularly preferably 100 nm or less, from the viewpoints of the function of scavenging and decomposing hydrogen peroxides, dispersibility, film forming properties, adhesive function and the like.

The second layer may but need not contain a binder. In cases where the second layer does not contain a binder, the second layer can be formed, for example, by spraying the carbon particles to the first layer. Details will be described later.

The second layer preferably contains a binder, from the viewpoint of membrane strength and productivity. The binder may be, for example, an organic binder or an inorganic binder. Any of various types of polymers can be used as the organic binder, and a known binder which can be prepared by the sol-gel method can be used as the inorganic binder.

The second layer preferably contains a polymer as the binder. Such a polymer may be, for example, a non-ionic polymer or an ionic polymer. These polymers can be used singly or in combination. The non-ionic polymer may be, for

example, a fluoropolymer or a hydrocarbon-based polymer.

Examples of the non-ionic fluoropolymer include polytetrafluoroethylene, poly(vinylidene fluoride), copolymers of vinylidene fluoride and hexafluoropropylene, copolymers of vinylidene fluoride and trifluoroethylene, copolymers of vinylidene fluoride and tetrafluoroethylene, and poly(vinylidene fluoride).

Examples of the non-ionic hydrocarbon-based polymer include polysulfone, polyether sulfone, polyphenylene oxide, polyarylene ether, polyphenylene sulfide, polyphenylene sulfide sulfone, polyparaphenylene, a polyarylene-based polymer, polyarylene ketone, polyether ketone, polyarylene phosphine oxide, polyether phosphine oxide, polybenzoxazole, polybenzothiazole, polybenzimidazole, polyamide, polyimide, polyetherimide, polyimidesulfone and polyvinyl alcohol.

Examples of the ionic polymer include the fluoropolymer electrolytes and hydrocarbon-based polymer electrolytes described above,

The polymer to be contained in the second layer is preferably a polymer electrolyte, from the viewpoint of electrolysis efficiency. Further, the polymer is particularly preferably a fluoropolymer electrolyte, from the viewpoint that the degradation due to hydrogen peroxides is less likely to occur, and the viewpoint of improving the adhesion between a catalyst layer, which may be provided on the cathode, and the second layer.

In cases where the second layer contains a polymer, the ratio (I/C) of the mass (I) of the polymer to the mass (C) of the carbon particles, is preferably 0.4 or more, more preferably 0.5 or more, and particularly preferably 0.6 or more, and at the same time, preferably 2.0 or less, more preferably 1.6 or less, and particularly preferably 1.4 or less, from the viewpoints of the durability (namely, reducing the degradation) of the first layer, the electrolysis efficiency, and the adhesion between the first layer and the second layer.

In cases where the second layer contains a binder, the second layer preferably contains the fluoropolymer electrolyte in an amount of 60% by mass or more, more preferably 75% by mass or more, still more preferably 90% by mass or more, and particularly preferably 100% by mass, with respect to the total mass of the binder.

The second layer can further contain a known hydrogen peroxide decomposer and/or a radical scavenger. Examples of the hydrogen peroxide decomposer include phosphorus compounds such as polyphosphoric acid, trimethylphosphine and alkyl phosphites. Examples of the radical scavenger include: phenol-based derivatives such as 2,6-di-tert-butyl-methylphenol, 2,4-dimethyl and 2,4-di-t-butyl-6-methyl; aromatic amine derivatives such as N,N'-diphenyl-p-phenylenediamine and phenyl-β-naphthylamine; and metal compounds of metals such as Ce, Ru, Mn, Co and Fe. Among these, a Ce compound is preferred, and Ce oxide is particularly preferred.

The second layer can contain any of various types of additives, such as, for example, a surfactant, a non-electrolyte polymer, an elastomer and/or the like, as long as the effects of the present invention are not impaired.

The content mass of the carbon particles in the second layer is preferably 25% by mass or more, more preferably 30% by mass or more, and particularly preferably 40% by mass or more, with respect to the total mass of the second layer. Further, the above-described proportion is preferably 90% by mass or less, more preferably 80% by mass or less, and particularly preferably 70% by mass or less.

The thickness of the second layer is preferably 3 μm or more, more preferably 5 μm or more, and particularly preferably 7 μm or more, from the viewpoint of reducing the transfer of the hydrogen peroxides. From the viewpoint of ensuring a good water electrolysis performance, on the other hand, the thickness of the second layer is preferably 30 μm or less, more preferably 25 μm or less, still more preferably 20 μm or less, and particularly preferably 15 μm or less.

Further, the ratio (T2/T1) of the thickness (T2) of the second layer to the thickness (T1) of the first layer is preferably 0.30 or less, more preferably 0.25 or less, still more preferably 0.20 or less, and particularly preferably 0.15 or less, from the viewpoint of ensuring a good water electrolysis performance. From the viewpoints of reducing the transfer of hydrogen peroxides and improving the durability, on the other hand, the ratio (T2/T1) is preferably 0.03 or more, more preferably 0.05 or more, still more preferably 0.06 or more, and particularly preferably 0.07 or more.

In the electrolyte membrane according to the present invention, and a membrane electrode assembly (MEA) or a catalyst coated membrane (CCM) using the same, the second layer of the electrolyte membrane and the catalyst layer of the cathode to be described later are preferably arranged in abutment with each other, from the viewpoints of the electrolysis efficiency and the durability.

[Method of Producing Electrolyte Membrane]

The method of producing the electrolyte membrane will be described below with reference to examples. As the polymer electrolyte to be used in the first layer, it is possible to use a commercially available product such as "Nafion" (registered trademark) (manufactured by The Chemours Company TT, LLC), or one obtained by coating a polymer electrolyte solution on a base material for membrane formation, such as a PET film, followed by drying, to form a membrane.

The first layer may have a form in which a portion (non-composite portion) which includes a polymer electrolyte and does not include a porous substrate, and which can be in the form of layers, is provided on one surface or both surfaces

of a portion (composite portion) which includes the porous substrate and the polymer electrolyte, and which can be in the form of layers. Examples of the method of producing the first layer having the above-described form include: a method in which a polymer electrolyte solution is coated on a base material for membrane formation, and a porous substrate is pasted on the coated solution, to impregnate the porous substrate with the electrolyte solution; and a method in which the polymer electrolyte solution is further coated on the porous substrate which has been impregnated with the polymer electrolyte solution by the above-described method, followed by drying.

It is also possible to use, as the polymer electrolyte, a polymer electrolyte in a state where a salt of an ionic group and a cation of an alkali metal or an alkaline earth metal is formed. In such a case, it is preferred to perform an acid treatment for exchanging the cation of the alkali metal or the alkaline earth metal with a proton, after forming the first layer on the base material for membrane formation. Here, the acid treatment can be performed by a known method.

In the electrolyte membrane in the present invention, it is easier to produce the membrane by laminating the second layer on the first layer described above. The second layer can be laminated by a spray method, a coating method or a transfer method.

The spray method is a method in which carbon particles are sprayed on the first layer through a nozzle or the like, to form and laminate the second layer. After forming the second layer on the first layer, the resulting laminate is preferably heat-pressed in order to enhance the adhesion between the layers. Further, the adhesion between the first layer and the second layer can be enhanced by spraying the carbon particles before the first layer is completely dried, in the production process of the first layer described above.

The coating method is a method in which a coating solution for forming a second layer is coated on the first layer formed on the base material for membrane formation, followed by drying, to laminate the second layer. The transfer method is a method in which a transfer sheet obtained by laminating the second layer on a base material for transfer, and the first layer formed on the base material for membrane formation, are heat-pressed, to transfer the second layer on the first layer. In the case of using the coating method or the transfer method, the second layer preferably contains the binder described above.

[Electrodes]

The anode and the cathode are each made of a member which can be used for forming an electrode. The member which can be used for forming an electrode is not particularly limited, and any known material and configuration known in the art can be used for each electrode. For example, an electrode having a laminated configuration in which a catalyst layer is laminated on an electrode substrate made of a material having an electrical conductivity, or an electrode in which a catalyst is supported on an electrode substrate, can be used. More specific embodiments of such a catalyst layer and electrode substrate will be described later. Further, as the catalyst to be supported on the electrode substrate, catalyst particles to be used in the catalyst layers to be described later can be used. Among those mentioned above, an electrode having a laminated configuration of an electrode substrate and a catalyst layer is preferred. In the case of using electrodes having the laminated configuration, in a water electrolysis cell, each catalyst layer may be provided on the side opposite to the side of the electrolyte membrane or on the side of the electrolyte membrane, seen from the electrode substrate, but is preferably provided on the side of the electrolyte membrane.

It is also possible to provide catalyst layers on the electrolyte membrane. Hereinafter, an electrode on which a catalyst layer is provided is sometimes referred to as "catalyst coated electrode", and an electrolyte membrane on which catalyst layers are provided is sometimes referred to as "catalyst coated membrane (CCM)". Each catalyst layer can be laminated on an electrode substrate or on the electrolyte membrane by a known coating method or transfer method.

[Electrode Substrates]

The main purpose of electrode substrates (sometimes also functions as gas diffusion layers) is the application of a voltage. Each electrode substrate is made of an electrically conductive material, and it is possible to use, for example, a porous substrate made of a metal, carbon or the like. The metal porous substrate may be, for example, a metal nonwoven fabric, a sintered product of metal fibers, a sintered product of a metal powder, or a sintered product of foamed metal. The carbon porous substrate may be, for example, a carbon felt, a carbon paper, a carbon cloth, or a sintered product of graphite particles.

The electrode substrate forming the anode is preferably a metal porous substrate which has an excellent corrosion resistance, for example, in a high-potential and strongly-acidic environment in the presence of oxygen. The metal constituting the metal porous substrate is preferably titanium, aluminum, nickel, stainless steel, or an alloy containing at least one of the above-described metals as a main component, and particularly preferably titanium or an alloy containing titanium as a main component.

The electrode substrate forming the cathode is preferably a carbon porous substrate, and particularly preferably a carbon paper, from the viewpoints of material cost and electrical conductivity.

[Catalyst Layers]

Catalyst layers are generally layers containing catalyst particles and a polymer electrolyte. In general, particles of a metal such as a platinum group element (platinum, ruthenium, rhodium, palladium, osmium or iridium), iron, lead, gold, silver, copper, chromium, cobalt, nickel, manganese, vanadium, molybdenum, gallium or aluminum, or an alloy, an oxide or a complex oxide thereof or the like, are used as the catalyst particles. In addition, carbon particles (catalyst metal-supported carbon particles) supporting any of the above-described catalyst metals are also commonly used. The carbon particles described above are not particularly limited, as long as they are in the form of fine particles having an electrical conductivity, and do not corrode or degrade by the reaction with a catalyst. Any of carbon black, graphite, activated carbon, carbon fibers, carbon nanotubes and fullerene particles can be preferably used as the carbon particles.

Examples of the polymer electrolyte include fluoropolymer electrolytes and hydrocarbon-based polymer electrolytes such as those described above. The polymer electrolyte in each catalyst layer is preferably a fluoropolymer electrolyte, and more preferably a perfluorinated sulfonic acid-based polymer, from the viewpoints of diffusivity and chemical durability.

The mass ratio (catalyst particles/ polymer electrolyte) of the content of the catalyst particles to the content of the polymer electrolyte, in each catalyst layer, is generally within the range of from 1 to 15, and preferably within the range of from 1.5 to 13.

The catalyst layer (sometimes referred to as "cathode catalyst layer") included in the cathode and the catalyst layer (sometimes referred to as "anode catalyst layer") included in the anode may be made of the same material or different materials.

In the cathode catalyst layer, any catalyst that generates hydrogen from protons as the raw material can be used as the catalyst particles. The cathode catalyst layer preferably contains a platinum catalyst, and it is particularly preferred to use platinum-supported carbon particles.

In the anode catalyst layer, any catalyst that generates oxygen from water as the raw material can be used as the catalyst particles. It is preferred to use the particles of a noble metal such as iridium, ruthenium, rhodium or palladium, or an oxide thereof, and the particles of iridium oxide is particularly preferred. At this time, the catalyst particles may be used by themselves alone, or may be supported on titanium oxide or the like.

[Membrane Electrode Assembly (MEA)]

The respective electrodes constituting the anode and the cathode may be integrated with the electrolyte membrane. One in which the electrodes and the electrolyte membrane are integrated is referred to as "membrane electrode assembly (MEA)". Examples of the form of the membrane electrode assembly include one in which electrode substrates are laminated on the catalyst coated membrane (CCM), and one in which catalyst coated electrodes are laminated on the electrolyte membrane.

The membrane electrode assembly described above may be one in which the electrolyte membrane and the electrodes are bonded in advance, or one obtained by separately arranging the electrolyte membrane and the electrodes in a cell, and bonding these members in a tightening step performed thereafter.

The membrane electrode assembly suitably used in the present invention preferably has a configuration of "anode electrode substrate/ anode catalyst layer/ electrolyte membrane/ cathode catalyst layer/ cathode electrode substrate". In the above-described configuration, it is more preferred to use a catalyst coated membrane in which the anode catalyst layer and the cathode catalyst layer are respectively laminated on both surfaces of the electrolyte membrane. Further, while the cathode catalyst layer is provided on the side of the second layer of the electrolyte membrane, in the above-described configuration, it is preferred that the second layer and the cathode catalyst layer are arranged in abutment with each other.

[Catalyst Coated Membrane (CCM)]

As described above, the catalyst coated membrane is one in which the anode catalyst layer is laminated on the side of the first layer of the electrolyte membrane, and the cathode catalyst layer is laminated on the side of the second layer of the electrolyte membrane.

The catalyst layers can be laminated on the electrolyte membrane, for example, by a method such as the coating method, the transfer method, or a combination of the coating method and the transfer method. Such a method is not particularly limited, and any known method can be used.

The coating method can be performed by coating a coating solution for forming a catalyst layer on the electrolyte membrane, using a known coating method. Specifically, the coating method may be, for example, a method in which a coating solution for forming a cathode catalyst layer is coated on the side of the second layer of the electrolyte membrane, followed by drying, to form a cathode catalyst layer, and a coating solution for forming an anode catalyst layer is coated on

the side of the first layer of the electrolyte membrane, followed by drying, to form an anode catalyst layer. The cathode catalyst layer and the anode catalyst layer may be laminated in the order opposite to that described above. In the case of using the coating method, it is preferred that the base material for membrane formation or a support be laminated in advance, on the surface of the electrolyte membrane opposite to the surface to be coated with the coating solution for forming a catalyst layer.

The transfer method may be, for example, a method in which: a cathode catalyst layer transfer sheet obtained by laminating a cathode catalyst layer on a base material for transfer, and an anode catalyst layer transfer sheet obtained by laminating an anode catalyst layer on a base material for transfer are separately prepared; the cathode catalyst layer transfer sheet is pasted on the side of the second layer of the electrolyte membrane, and the anode catalyst layer transfer sheet is pasted on the side of the first layer of the electrolyte membrane; and the resulting laminate is heat-pressed.

The combination of the coating method and the transfer method may be, for example, a method in which: a coating solution for forming a cathode catalyst layer is first coated on the side of the second layer of the electrolyte membrane, followed by drying, to form a cathode catalyst layer; then an anode catalyst layer transfer sheet is pasted on the opposite surface of the electrolyte membrane; and the resulting laminate is heat-pressed, to transfer the anode catalyst layer. Conversely, the combination of the methods may be a method in which a coating solution for forming an anode catalyst layer is coated, and the cathode catalyst layer is transferred. Further, in the production process of the catalyst coated membrane described above, it is possible to use a method in which the second layer of the electrolyte membrane and the cathode catalyst layer are simultaneously laminated on the first layer of the electrolyte membrane. Examples of such a method include a method in which the first layer formed on a base material for membrane formation, and a transfer sheet obtained by sequentially laminating the cathode catalyst layer and the second layer on a base material for transfer, are heat-pressed, to simultaneously laminate the second layer and the cathode catalyst layer on the first layer.

[Water Electrolysis Cell and Water Electrolyzer]

The water electrolysis cell according to the present invention is a water electrolysis cell whose interior is divided into an anode and a cathode by an electrolyte membrane, namely, an electrode that serves as the anode and an electrode that serves as the cathode are separated by the electrolyte membrane, wherein the electrolyte membrane includes a first layer containing a polymer electrolyte, and a second layer containing carbon particles, and wherein the second layer is provided on the side of the cathode. The details of the first layer and the second layer are as described above. Further, the anode and the cathode can also have the configurations described above.

A typical example of the water electrolysis cell according to the present invention has the same configuration as the electrolysis cell shown in FIG. 1 described above. The "electrolysis cell" shown in FIG. 1 has the same meaning as "water electrolysis cell", and thus referred to as "water electrolysis cell" herein.

That is, in the water electrolysis cell according to the present invention, the electrolyte membrane 10 is provided between the anode 20 and the cathode 30, so as to divide the interior of the water electrolysis cell. In the example shown in FIG. 1, the water electrolysis cell has a configuration in which the separators 41 and 42 are sandwiching the above-described members from both sides. The electrolyte membrane 10 includes the first layer 11 and the second layer 12, and the second layer 12 is provided on the side of the cathode 30 of the first layer 11. In the water electrolyzer according to the present invention, a power supply (not shown in the figure) is connected to the anode 20 and the cathode 30 so as to apply a voltage thereto. A commonly known water electrolyzer includes, as basic components: a water supply unit that supplies water to a water electrolysis cell; a power supply unit that supplies power to the water electrolysis cell; an oxygen discharge unit that discharges the generated oxygen; a hydrogen discharge unit that discharges the generated hydrogen; a water discharge unit that discharges an excessive water after the completion of the electrolysis; and the like. The water electrolyzer according to the embodiment of the present invention can also include the basic components as described above.

Examples

The present invention will be described below in further detail with reference to Examples. However, the present invention is in no way not limited to these Examples. Various measurement conditions are as follows.

[Example 1]

[Synthesis of Polyether ketone-based Block copolymer b 1]

[Synthesis Example 1]

(Synthesis of 2,2-Bis(4-hydroxyphenyl)-1,3-dioxolane (K-DHBP) Represented by the Following Chemical Formula (G1))

Into a 500 mL flask equipped with a stirrer, a thermometer and a distillation tube, 49.5 g of 4,4'-dihydroxybenzophenone, 134 g of ethylene glycol, 96.9 g of trimethyl orthoformate and 0.50 g of p-toluenesulfonic acid monohydrate were introduced, and these components were dissolved. Thereafter, the resulting solution was stirred for two hours while maintaining the temperature within the range of from 78 to 82°C. Further, the internal temperature was gradually raised to 120°C, and heating was continued until the distillation of methyl formate, methanol and trimethyl orthoformate completely stopped. After cooling the resulting reaction liquid to room temperature, the reaction liquid was diluted with ethyl acetate, and the organic layer was washed with 100 mL of a 5% aqueous solution of potassium carbonate, and separated. Thereafter, the solvent was removed by distillation. A quantity of 80 mL of dichloromethane was added to the residue to allow crystals to precipitate, the resulting crystals were filtered and dried, to obtain 52.0 g of 2,2-bis(4-hydroxyphenyl)-1,3-dioxolane represented by the following chemical formula (G1). The GC analysis revealed that the thus obtained crystals were composed of 99.9% of 2,2-bis(4-hydroxyphenyl)-1,3-dioxolane and 0.1% of 4,4'-dihydroxybenzophenone. The resulting 2,2-bis(4-hydroxyphenyl)-1,3-dioxolane had a purity of 99.9%.

[Chem 1]

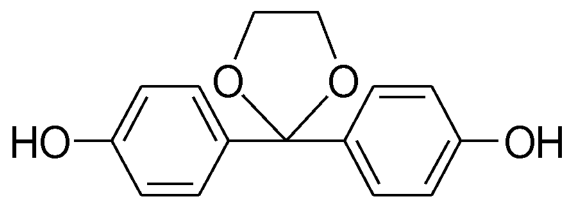

(G1)

[Synthesis Example 2]

(Synthesis of Disodium-3,3'-disulfonate-4,4'-difluorobenzophenone Represented by the Following Chemical Formula (G2))

A quantity of 109.1 g of 4,4'-difluorobenzophenone (a reagent manufactured by Sigma-Aldrich Co. LLC.) was allowed to react in 150 mL of fuming sulfuric acid (50% $SO_3$) (a reagent manufactured by FUJIFILM Wako Pure Chemical Corporation) at 100°C for 10 hours. Thereafter, the resulting reaction liquid was introduced into a large amount of water little by little, neutralized with sodium hydroxide, and then 200 g of salt (NaCl) was added to allow the synthesized product to precipitate. The resulting precipitates were separated by filtration, and recrystallized with an aqueous solution of ethanol, to obtain disodium-3,3'-disulfonate-4,4'-difluorobenzophenone represented by the following chemical formula (G2). The resulting disodium-3,3'-disulfonate-4,4'-difluorobenzophenone had a purity of 99.3%.

[Chem 2]

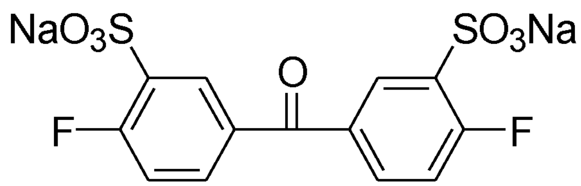

(G2)

[Synthesis Example 3]

(Synthesis of Non-ionic Oligomer a1 Represented by the Following General Formula (G3))

Into a 2,000 mL SUS polymerization apparatus equipped with a stirrer, a nitrogen introduction pipe and a Dean-Stark trap, 16.59 g of potassium carbonate (a reagent manufactured by Sigma-Aldrich Co. LLC., 120 mmol), 25.83 g of K-DHBP (100 mmol) obtained in Synthesis Example 1, and 20.3 g of 4,4'-difluorobenzophenone (a reagent manufactured by Sigma-Aldrich Co. LLC., 93 mmol) were introduced. After nitrogen replacement, 300 mL of N-methylpyrrolidone (NMP) and 100 mL of toluene were added to the apparatus, the resulting mixture was dehydrated at 150°C, then heated to remove toluene, and polymerization was carried out at 170°C for three hours. The polymerization solution was purified by reprecipitation with a large amount of methanol, to obtain a hydroxy-terminated non-ionic oligomer a1. The resulting hydroxy-terminated non-ionic oligomer a1 had a number average molecular weight of 10,000.

Into a 500 mL three-neck flask equipped with a stirrer, a nitrogen introduction pipe and a Dean-Stark trap, 1.1 g of potassium carbonate (a reagent manufactured by Sigma-Aldrich Co. LLC., 8 mmol), and 20.0 g (2 mmol) of the hydroxy-terminated non-ionic oligomer a1 were introduced. After replacing the interior of the apparatus with nitrogen, 100 mL of NMP and 30 mL of toluene were added, the resulting mixture was dehydrated at 100°C, and then heated to remove toluene. Further, 2.2 g of hexafluorobenzene (a reagent manufactured by Sigma-Aldrich Co. LLC., 12 mmol) was added, and the reaction was allowed to proceed at 105°C for 12 hours. The resulting reaction liquid was purified by reprecipitation with a large amount of isopropyl alcohol, to obtain a non-ionic oligomer a1 (terminal: fluoro group) represented by the following general formula (G3). The resulting non-ionic oligomer a1 had a number average molecular weight of 11,000.

[Chem 3]

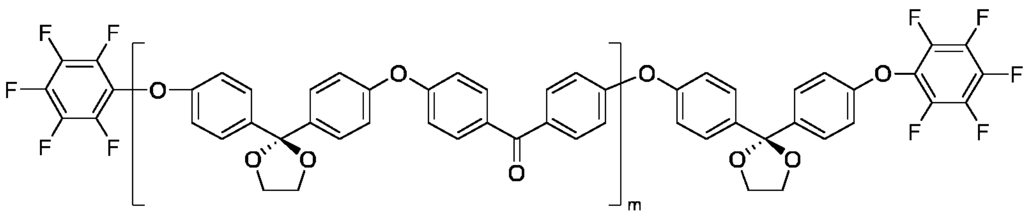

(G3)

[Synthesis Example 4]

(Synthesis of Ionic Oligomer a2 Represented by the Following General Formula (G4))

Into a 2,000 mL SUS polymerization apparatus equipped with a stirrer, a nitrogen introduction pipe and a Dean-Stark trap, 27.6 g of potassium carbonate (a reagent manufactured by Sigma-Aldrich Co. LLC., 200 mmol), 12.9 g of K-DHBP (50 mmol) obtained in Synthesis Example 1, 9.3 g of 4,4'-biphenol (a reagent manufactured by Sigma-Aldrich Co. LLC., 50 mmol), 39.3 g of disodium-3,3'-disulfonate-4,4'-difluorobenzophenone (93 mmol) obtained in Synthesis Example 2, and 17.9 g of 18-crown-6 (manufactured by FUJIFILM Wako Pure Chemical Corporation, 82 mmol) were introduced. After nitrogen replacement, 300 mL of NMP and 100 mL of toluene were added to the apparatus, the resulting mixture was dehydrated at 150°C, then heated to remove toluene, and polymerization was carried out at 170°C for 6 hours. The polymerization solution was purified by reprecipitation with a large amount of isopropyl alcohol, to obtain an ionic oligomer a2 (terminal: hydroxy group) represented by the following general formula (G4). The resulting ionic oligomer a2 had a number average molecular weight of 16,000. In the general formula (G4), M represents a hydrogen atom, Na or K.

[Chem 4]

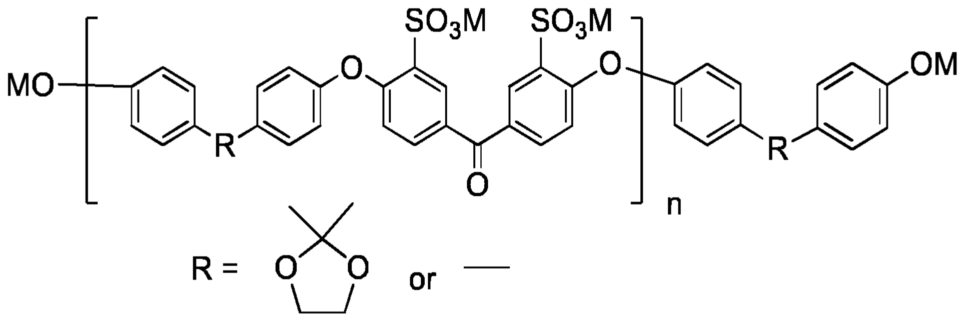

(G4)

(Synthesis of Polyether Ketone-based Block Copolymer b1)

Into a 2,000 mL SUS polymerization apparatus equipped with a stirrer, a nitrogen introduction pipe and a Dean-Stark trap, 16 g of the ionic oligomer a2 and 11 g of the non-ionic oligomer a1 were introduced. NMP was added to the resulting mixture such that the total amount of oligomers introduced was 7wt%, and the reaction was allowed proceed at 105°C for 24 hours.

The reaction liquid was subjected to reprecipitation in a large amount of a mixed liquid of isopropyl alcohol/NMP (mass ratio 2/1), and the resulting precipitates were collected by filtration and washed with a large amount of isopropyl alcohol blocks, to obtain a block copolymer C1. The thus obtained polyether ketone-based block copolymer b1 had a weight average molecular weight of 340,000, and an ion exchange capacity (IEC) of 2.1 meq/g.

[Preparation of Electrolyte Membrane]

[Preparation of First Layer]

A PET film "Lumirror" (registered trademark) 125T60 manufactured by Toray Industries, Inc. was pasted and fixed on an SUS plate, using a "KAPTON" (registered trademark) tape. The polyether ketone-based block copolymer b1 synthesized as described above was dissolved in in NMP, and the resulting solution was filtered under pressure using a 1 μm polypropylene filter, to prepare a solution (Solution P1, concentration 13% by mass). The thus prepared Solution P1 was cast and coated onto the PET film, followed by drying, to obtain a polymer membrane in the form of a film. Further, the resulting polymer membrane was immersed in a 10% by mass aqueous solution of sulfuric acid at 80°C for 24 hours to allow proton exchange and deprotection reactions to proceed, and then sufficiently washed by being immersed in a large excess amount of pure water for 24 hours, to obtain a first layer. The thus obtained first layer had a thickness of 90 μm.

[Lamination of Second Layer]

The coating solution for forming a second layer to be described below was cast and coated onto the first layer, followed by drying, to laminate a second layer on the first layer. The thus obtained second layer had a thickness of 10 μm.

[Preparation of Coating Solution for Forming Second Layer]

· Carbon particles: 10 parts by mass of carbon black ("VULCAN" (registered trademark) XC72, manufactured by Cabot Corporation)
· Binder: 9 parts by mass in terms of solid content of a fluoropolymer electrolyte (Nation" (registered trademark) product number: D2020, manufactured by The Chemours Company TT, LLC)
· Solvent: a mixed solvent of water and 1-propylalcohol at a mass ratio of 4:6.

The carbon particles and the polymer electrolyte described above were dispersed in the solvent using a bead mill, to prepare a coating solution having a solid content concentration of 10% by mass. The ratio (I/C) of the mass (I) of the polymer electrolyte to the mass (C) of the carbon particles in the thus obtained coating solution is 0.9.

[Preparation of Catalyst Coated Membrane]

The following cathode catalyst layer was laminated on the side of the second layer of the electrolyte membrane prepared as described above, and the following anode catalyst layer was laminated on the side of the first layer of the electrolyte membrane, to prepare a catalyst coated membrane. The cathode catalyst layer and the anode catalyst layer each had a dry thickness of 11 μm.

< Cathode Catalyst Layer>

A catalyst layer that contains, as the total solid content, 10 parts by mass of catalyst particles (TEC10E50E, platinum catalyst supported carbon particles (platinum supporting rate: 50% by mass) manufactured by Tanaka Kikinzoku Kogyo K.K.), and 5 parts by mass in terms of solid content of a fluoropolymer electrolyte ("Nation" (registered trademark), product number: D2020, manufactured by The Chemours Company TT, LLC).

< Anode Catalyst Layer >

A catalyst layer that contains, as the total solid content, 10 parts by mass of catalyst particles (Elyst Ir 75 0480, an $IrO_2$ catalyst (Ir content: 75%) manufactured by Umicore S.A.), and 1.3 parts by mass in terms of solid content of a fluoropolymer electrolyte ("Nafion" (registered trademark), product number: D2020, manufactured by The Chemours Company TT, LLC).

[Preparation of Membrane Electrode Assembly]

A commercially available gas diffusion electrode, 24BCH, manufactured by SGL Carbon AG, as a cathode which also functions as a gas diffusion layer, was laminated on the side of the cathode catalyst layer of the catalyst coated membrane prepared as described above, and a commercially available porous titanium sintered plate, as an anode which also functions as a gas diffusion layer, was laminated on the side of the anode layer of the catalyst coated membrane, to prepare a membrane electrode assembly.

[Water Electrolysis Method]

The membrane electrode assembly prepared as described above was set to a JARI standard cell "Ex-1" (electrode surface area: 25 $cm^2$) manufactured by Eiwa Corporation, and the cell temperature was controlled to 50°C. Deionized water having an electrical conductivity of 1 μS/cm or less was supplied to both the anode and the cathode at a flow rate of 0.2 L/min and at an atmospheric pressure, a voltage was applied to the electrodes so as to achieve a current density of 1.0 A/$cm^2$, and water electrolysis was carried out over 2,000 hours (indicated as "Water Electrolysis Method 1" in Table 1).

[Comparative Example 1]

An electrolyte membrane, a catalyst coated membrane and a membrane electrode assembly were prepared in the same manner as in Example 1, except that the second layer was not laminated, and water electrolysis was carried out in the same manner as in Example 1.

[Example 2 and Comparative Example 2]

In Example 2 and comparative Example 2, water electrolysis was carried out in the same manner as the water electrolysis method in the Example 1 and Comparative Example 1 described above, respectively, except that deionized water was supplied only to the anode (indicated as "Water Electrolysis Method 2" in Table 1). Example 2 corresponds to Example 1, and Comparative Example 2 corresponds to Comparative Example 1.

[Example 3]

An electrolyte membrane, a catalyst coated membrane and a membrane electrode assembly were prepared in the same manner as in Example 1, except that the first layer in Example 1 was changed to a fluoropolymer electrolyte layer ("Nafion" (registered trademark) Nafion 115 having a thickness of 125 μm, manufactured by The Chemours Company TT, LLC), and water electrolysis (indicated as "Water Electrolysis Method 1" in Table 2) was carried out in the same manner as in Example 1.

[Comparative Example 3]

An electrolyte membrane, a catalyst coated membrane and a membrane electrode assembly were prepared in the same manner as in Example 3, except that the second layer was not laminated, and water electrolysis was carried out in the same manner as in Example 1.

[Example 4 and Comparative Example 4]

In Example 4 and comparative Example 4, water electrolysis was carried out in the same manner as the water electrolysis method in the Example 3 and Comparative Example 3 described above, respectively, except that deionized water was supplied only to the anode (indicated as "Water Electrolysis Method 2" in Table 2). Example 4 corresponds to Example 3, and Comparative Example 4 corresponds to Comparative Example 3.

[Evaluation]

The applied voltage and the average voltage at electrolysis times of 0 hours, 500 hours, 1,000 hours and 2,000 hours, in the Examples and Comparative Examples described above, are shown in Table 1 and Table 2. Further, the relationship between the electrolysis time and the applied voltage is shown in FIG. 2 and FIG. 3. In each Table, "Water Electrolysis Method 1" indicates a form of water electrolysis in which water is applied to both the anode and the cathode; "Water Electrolysis Method 2" indicates a form of water electrolysis in which water is applied only to the anode; the applied voltage at the electrolysis time of "0 hours" indicates the initial applied voltage; "Average Applied Voltage" indicates the mean value of the applied voltage per 25 hours during the period of time from 0 hours to 2,000 hours; and "Rate of Voltage Increase" indicates the rate of voltage increase after 2,000 hours, calculated by the following Equation 1:

$$\text{Rate of voltage increase (\%)} = (V_1 - V_0) / V_0 \times 100 \qquad \text{Equation 1}$$

In Equation 1, Vi represents the applied voltage after 2,000 hours, and $V_0$ represents the initial applied voltage.

A lower value of the average applied voltage described above indicates a higher electrolysis efficiency, and a lower rate of voltage increase indicates a better durability (namely, the fact that the electrolysis efficiency is successfully maintained).

[Table 1]

[Table 1]

| | Electrolyte Membrane | | Water Electrolysis Method | Electrolysis Time and Applied Voltage (V) | | | | Average Applied Voltage (V) | Rate of Voltage Increase (%) |
|---|---|---|---|---|---|---|---|---|---|
| | First Layer | Second Layer | | 0 hours | 500 hours | 1000 hours | 2000 hours | | |
| Example 1 | Block copolymer b1 | Present | 1 | 1.743 | 1.756 | 1.759 | 1.760 | 1.756 | 1.0 |
| Comparative Example 1 | Block copolymer b1 | Absent | 1 | 1.702 | 1.753 | 1.770 | 1.802 | 1.766 | 5.9 |
| Example 2 | Block copolymer b1 | Present | 2 | 1.744 | 1.747 | 1.747 | 1.750 | 1.747 | 0.3 |
| Comparative Example 2 | Block copolymer b1 | Absent | 2 | 1.703 | 1.746 | 1.756 | 1.783 | 1.755 | 4.7 |

[Table 2]

[Table 2]

| | Electrolyte Membrane | | Water Electrolysis Method | Electrolysis Time and Applied Voltage (V) | | | | Average Applied Voltage (V) | Rate of Voltage Increase (%) |
|---|---|---|---|---|---|---|---|---|---|
| | First Layer | Second Layer | | 0 hours | 500 hours | 1000 hours | 2000 hours | | |
| Example 3 | Nafion 115 | Present | 1 | 1.870 | 1.875 | 1.875 | 1.880 | 1.875 | 0.5 |
| Comparative Example 3 | Nafion 115 | Absent | 1 | 1.850 | 1.879 | 1.889 | 1.902 | 1.884 | 2.8 |
| Example 4 | Nafion 115 | Present | 2 | 1.870 | 1.870 | 1.871 | 1.872 | 1.870 | 0.1 |
| Comparative Example 4 | Nafion 115 | Absent | 2 | 1.850 | 1.874 | 1.878 | 1.888 | 1.877 | 2.1 |

It can be seen from Tables 1 and 2 and FIGs. 2 and 3 that the water electrolysis method according to the present invention using an electrolyte membrane in which the second layer is laminated on the first layer achieved a lower rate of voltage increase and a better durability, as compared to the water electrolysis method of Comparative Examples using an electrolyte membrane in which the second layer is not laminated.

Further, it can be seen that Water Electrolysis Method 2 (in which water was supplied only to the anode) achieved a lower rate of voltage increase and a better durability, as compared to Water Electrolysis Method 1 (in which water was supplied to both the anode and the cathode).

In addition, FIG. 4 shows the relationship between the electrolysis time and the applied voltage in Examples 1 to 4. It can be seen that the applied voltage remained at a lower level over 2,000 hours in Example 1 and Example 2 (block copolymer b1), as compared to Example 3 and Example 4 (Nafion 115), and thus that the electrolysis efficiency was successfully maintained at a higher level. That is, FIG. 4 shows the fact that the membranes in which a hydrocarbon-based polymer electrolyte is used as the first layer are capable of maintaining a higher electrolysis efficiency for a long period of time, as compared to the membranes in which a fluoropolymer electrolyte is used as the first layer.

Reference Signs List

| | |
|---|---|
| 1 | electrolysis cell |
| 10 | electrolyte membrane |
| 11 | first layer |
| 12 | second layer |
| 20 | anode |
| 30 | cathode |
| 41,42 | separator |

## Claims

**1.** A water electrolysis method, comprising:

supplying water to an electrolysis cell whose interior is divided into an anode and a cathode by an electrolyte membrane, and electrolyzing said water, to generate oxygen at said anode and hydrogen at said cathode, wherein said electrolyte membrane comprises:

a first layer containing a polymer electrolyte; and
a second layer containing carbon particles, and provided on a cathode side of said first layer.

**2.** The water electrolysis method according to claim 1, wherein all or some of said carbon particles contained in said second layer are carbon particles on which a catalyst metal is not supported.

**3.** The water electrolysis method according to claim 1 or 2, wherein said second layer contains a binder.

4. The water electrolysis method according to claim 3, wherein all or a portion of said binder contained in said second layer is a fluoropolymer electrolyte.

5. The water electrolysis method according to any one of claims 1 to 4, wherein said first layer has a thickness of 40 μm or more and 250 μm or less.

6. The water electrolysis method according to any one of claims 1 to 5, wherein the ratio (T2/T1) of the thickness (T2) of said second layer to the thickness (T1) of said first layer is from 0.03 to 0.30.

7. The water electrolysis method according to any one of claims 1 to 6, wherein all or a portion of said polymer electrolyte contained in said first layer is a hydrocarbon-based polymer electrolyte.

8. The water electrolysis method according to any one of claims 1 to 7, wherein each of said anode and said cathode comprises a catalyst layer and an electrode substrate in the order mentioned from the side of said electrolyte membrane.

9. The water electrolysis method according to claim 8, wherein said catalyst layer included in said cathode contains a platinum catalyst.

10. The water electrolysis method according to claim 8 or 9, wherein said second layer of said electrolyte membrane and said catalyst layer of said cathode are arranged in abutment with each other.

11. The water electrolysis method according to any one of claims 1 to 10, wherein the supply of water to said electrolysis cell is performed at least to said anode.

12. A water electrolysis cell whose interior is divided into an anode and a cathode by an electrolyte membrane, wherein said electrolyte membrane comprises:

a first layer containing a polymer electrolyte; and
a second layer containing carbon particles, and provided on a cathode side of said first layer.

13. A water electrolyzer comprising the water electrolysis cell according to claim 12.

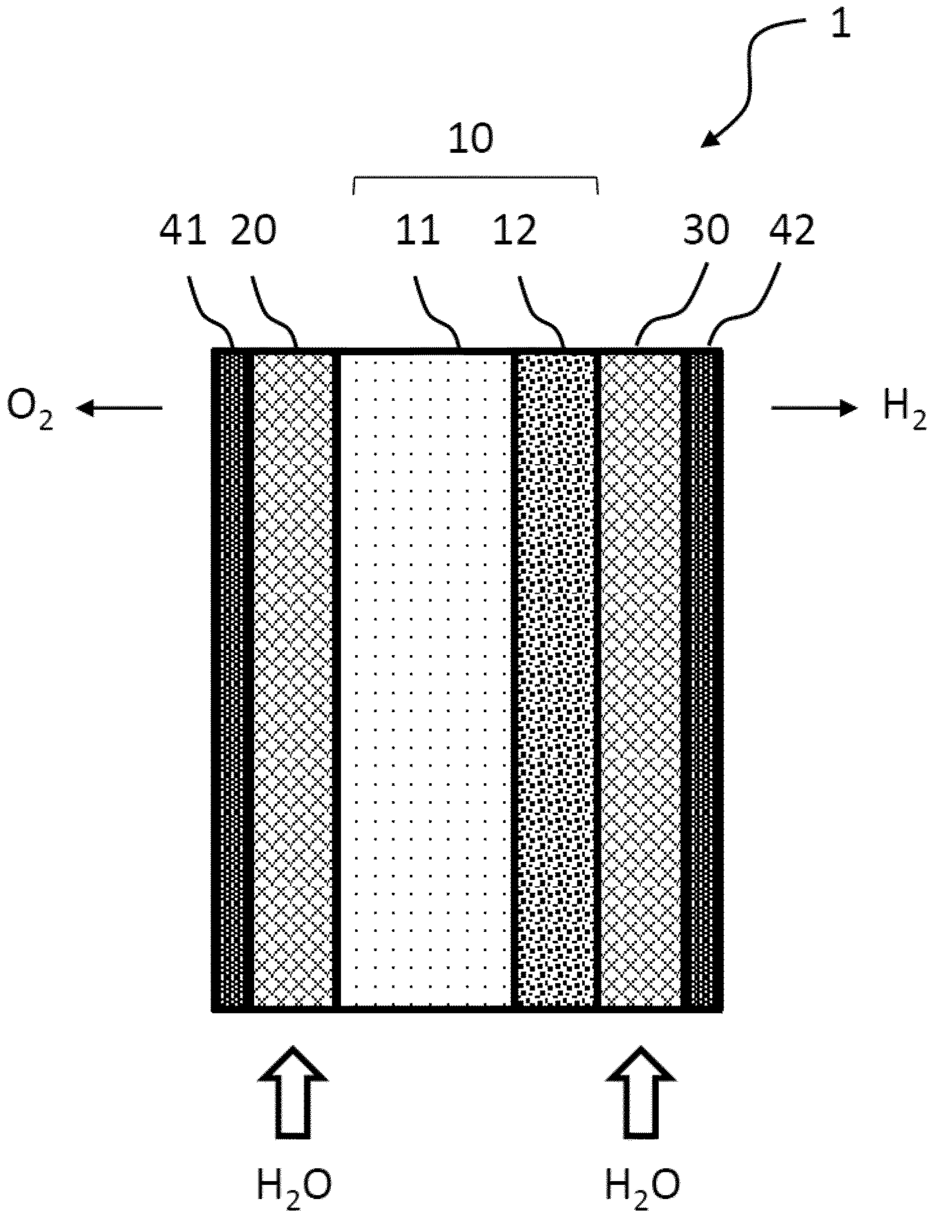


FIG. 1

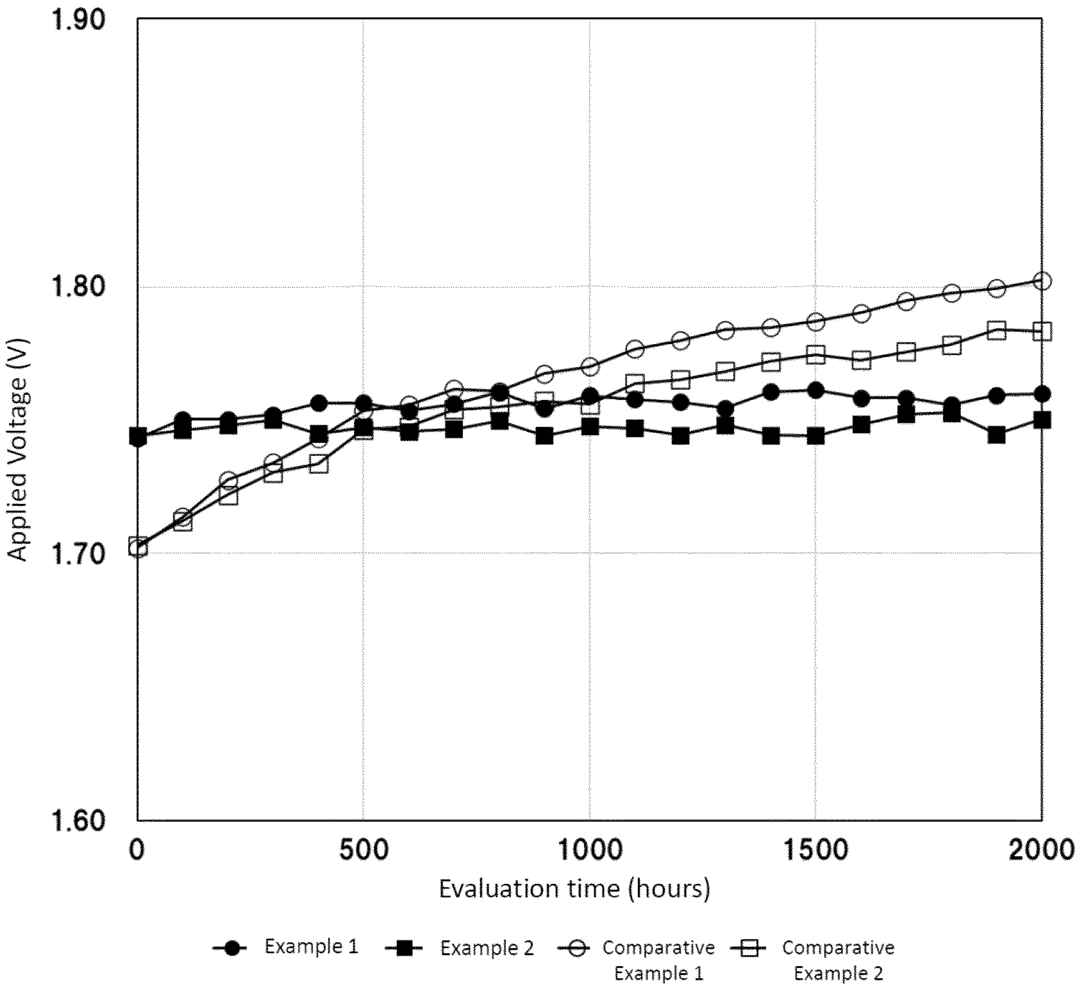
1.90
1.80
1.70
1.60
Applied Voltage (V)
0
500
1000
1500
2000
Evaluation time (hours)
Example 1
Example 2
Comparative Example 1
Comparative Example 2

FIG. 2

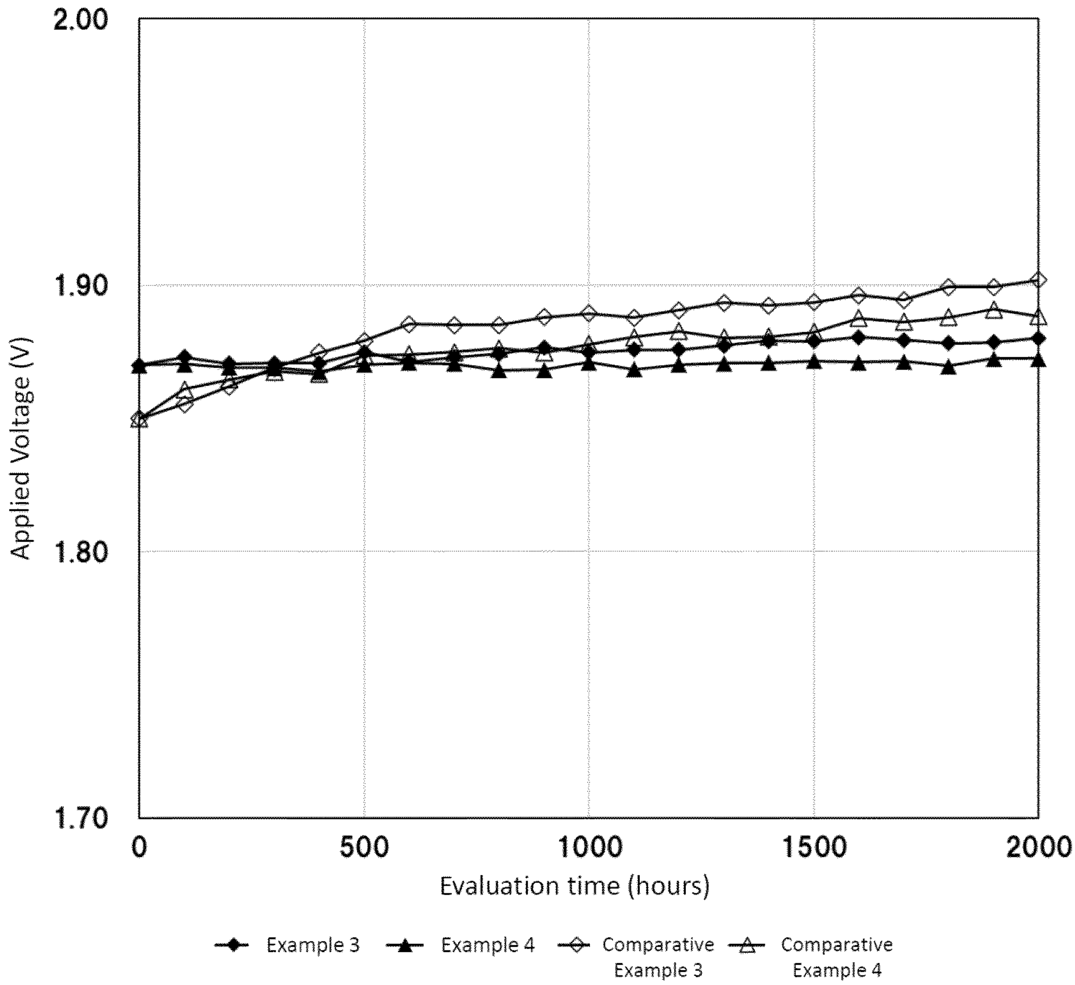
2.00
1.90
1.80
1.70
Applied Voltage (V)
0
500
1000
1500
2000
Evaluation time (hours)
Example 3
Example 4
Comparative Example 3
Comparative Example 4

FIG. 3

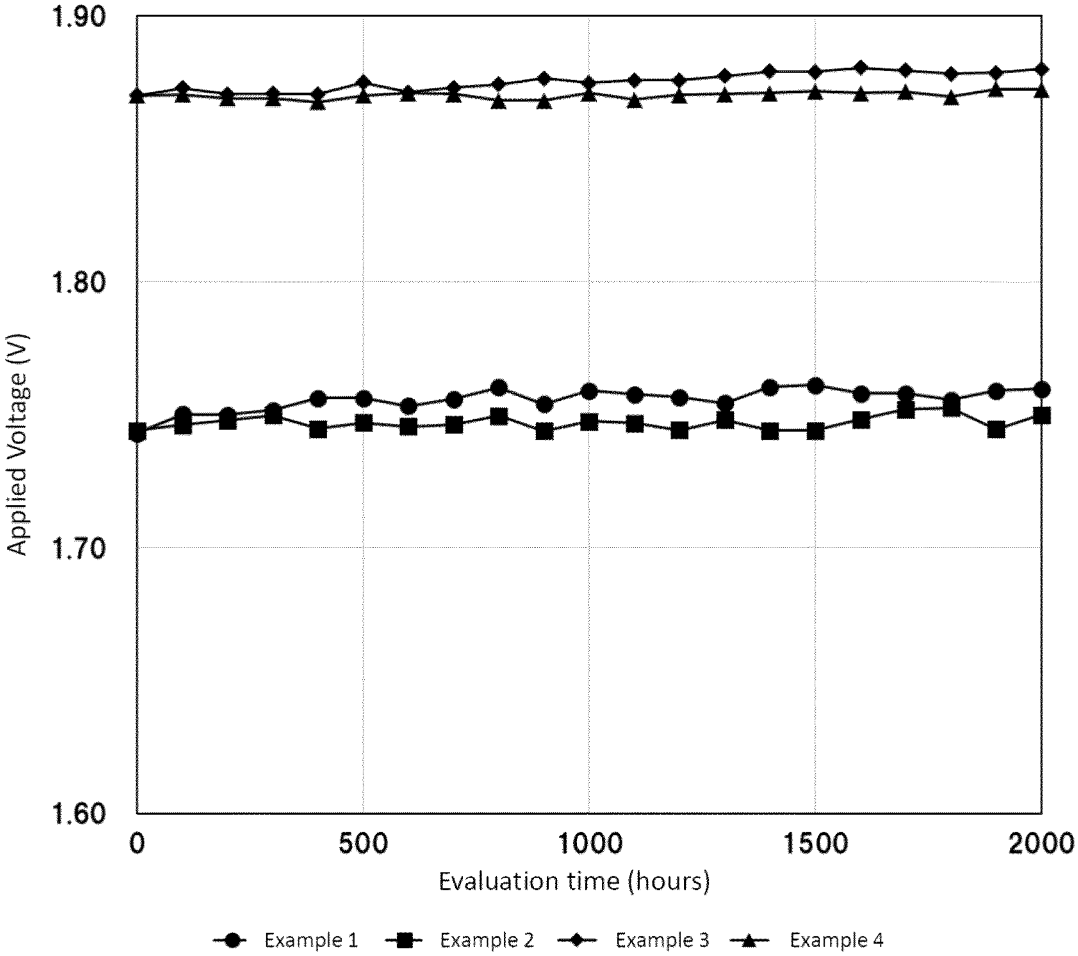
1.90
1.80
1.70
1.60
Applied Voltage (V)
0
500
1000
1500
2000
Evaluation time (hours)
Example 1
Example 2
Example 3
Example 4

FIG. 4

## INTERNATIONAL SEARCH REPORT

International application No.
**PCT/JP2023/009285**

### A. CLASSIFICATION OF SUBJECT MATTER

***C25B 13/08***(2006.01)i; ***C25B 1/02***(2006.01)i; ***C25B 1/04***(2021.01)i; ***C25B 9/00***(2021.01)i; ***C25B 9/23***(2021.01)i; ***C25B 11/052***(2021.01)i; ***C25B 11/053***(2021.01)i; ***C25B 11/065***(2021.01)i; ***C25B 11/081***(2021.01)i; ***C25B 13/02***(2006.01)i; ***C25B 13/04***(2021.01)i; ***H01B 1/06***(2006.01)i; ***H01M 8/10***(2016.01)i; ***H01M 8/1018***(2016.01)i; ***H01M 8/1039***(2016.01)i; ***H01M 8/1046***(2016.01)i; ***H01M 8/1051***(2016.01)i; ***H01M 8/1053***(2016.01)i; ***H01M 8/1058***(2016.01)i; ***H01M 8/1067***(2016.01)i

FI: C25B13/08 302; C25B13/08 301; H01M8/1067; H01M8/1018; H01M8/1051; H01M8/1053; H01M8/1039; H01M8/1058; C25B13/04 301; C25B9/23; C25B1/02; C25B9/00 A; H01M8/10 101; C25B1/04; C25B11/052; C25B11/081; C25B11/053; C25B11/065; H01M8/1046; H01B1/06 A; C25B13/02 301

According to International Patent Classification (IPC) or to both national classification and IPC

### B. FIELDS SEARCHED

Minimum documentation searched (classification system followed by classification symbols)

C25B13/08; C25B1/02; C25B1/04; C25B9/00; C25B9/23; C25B11/052; C25B11/053; C25B11/065; C25B11/081; C25B13/02; C25B13/04; H01B1/06; H01M8/10; H01M8/1018; H01M8/1039; H01M8/1046; H01M8/1051; H01M8/1053; H01M8/1058; H01M8/1067

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/196278 A1 (TORAY INDUSTRIES, INC.) 01 October 2020 (2020-10-01) claims, paragraphs [0011], [0112]-[0114], fig. 1 | 1-13 |
| Y | JP 2008-512844 A (POLYFUEL INC.) 24 April 2008 (2008-04-24) paragraphs [0031]-[0034] | 1-13 |
| Y | JP 2018-159121 A (TOSHIBA CORP) 11 October 2018 (2018-10-11) paragraphs [0041]-[0044], fig. 5 | 11 |
| A | JP 2009-510675 A (GORE ENTERPRISE HOLDINGS, INC.) 12 March 2009 (2009-03-12) paragraphs [0040]-[0042], [0088]-[0091], fig. 1-4 | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2023/009285

C. DOCUMENTS CONSIDERED TO BE RELEVANT

| Category* | Citation of document, with indication, where appropriate, of the relevant passages | Relevant to claim No. |
|---|---|---|
| A | JP 2009-533801 A (UTC POWER CORPORATION) 17 September 2009 (2009-09-17) paragraphs [0013]-[0025], fig. 1-3 | 1-13 |

Form PCT/ISA/210 (second sheet) (January 2015)

**INTERNATIONAL SEARCH REPORT**
**Information on patent family members**

International application No.
**PCT/JP2023/009285**

| Patent document cited in search report | Publication date (day/month/year) | Patent family member(s) | Publication date (day/month/year) |
|---|---|---|---|
| WO 2020/196278 A1 | 01 October 2020 | US 2022/0216494 A1<br>claims, paragraphs [0010], [0108]-[0110], fig. 1<br>EP 3951017 A1<br>CN 113454270 A<br>KR 10-2021-0142623 A<br>TW 202104670 A | |
| JP 2008-512844 A | 24 April 2008 | US 2006/0068268 A1<br>paragraphs [0031]-[0034]<br>WO 2006/029185 A2<br>EP 1800364 A2<br>CA 2579622 A<br>KR 10-2007-0100693 A<br>CN 101095256 A<br>AU 2005282498 A<br>TW 200633293 A | |
| JP 2018-159121 A | 11 October 2018 | US 2018/0274110 A1<br>paragraphs [0048]-[0051], fig. 5<br>EP 3378970 A1 | |
| JP 2009-510675 A | 12 March 2009 | US 2007/0072036 A1<br>paragraphs [0051]-[0053], [0122]-[0125], fig. 1-4<br>WO 2007/038040 A2<br>EP 1929574 A2<br>KR 10-2008-0047574 A<br>CA 2620860 A<br>CN 101273487 A<br>AT 544189 T | |
| JP 2009-533801 A | 17 September 2009 | US 2009/0017344 A1<br>paragraphs [0016]-[0028], fig. 1-3<br>WO 2007/117230 A1<br>EP 2008333 A1<br>CN 101416342 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021025116 A
- JP 2020525653 A
- JP 2021105194 A